# EUROPÄISCHE PATENTSCHRIFT

(11) **EP 0 754 942 B1**
(45) Veröffentlichungstag und Bekanntmachung des Hinweises auf die Patenterteilung: **05.03.2003**
(21) Anmeldenummer: 96810385.3
(22) Anmeldetag: 11.06.1996
(51) Int. Cl.: G01N 3/40, B22F 3/15

(54) **Verfahren zur Herstellung von Härtevergleichsplatten**
Process for preparing hardness reference plates
Procédé de préparation de plaques de référence de dureté

(30) Priorität: 14.07.1995 CH 207295
(43) Veröffentlichungstag der Anmeldung: 22.01.1997
(73) Patentinhaber: Sintec HTM AG, CH-2503 Biel (CH)
(72) Erfinder: Hofer, Beat, 4552 Derendingen (CH)
(74) Vertreter: AMMANN PATENTANWAELTE AG BERN

(56) Entgegenhaltungen:
- FR-A- 2 078 119
- FR-A- 2 412 374
- US-A- 4 380 926

## Beschreibung

Die vorliegende Erfindung betrifft ein Verfahren zur Herstellung von Härtevergleichsplatten.

Als Ausgangsmaterial dient ein metallisches Pulver in legierter oder unlegierter Form, das in eine Kapsel gefüllt, evakuiert und heissisostatisch gepresst wird.

Die Herstellung von Härtevergleichsplatten zur Prüfung von Härteprüfgeräten ist schon lange bekannt. Die Härteprüfverfahren sind die am häufigsten angewandten Verfahren, um einfach zu ermittelnde Werkstoffkenngrössen zu erhalten. Aus diesem Grund ist es notwendig, als Vergleichsgrösse zur Kontrolle der Härteprüfmaschine gleichmässige und homogene Härtevergleichsplatten zu benutzen. Da auf eine Prüffläche von 600 bis 10000 mm² mikroskopisch kleine Härteprüfeindrücke erzeugt werden, kann sich eine Abweichung im Härtewert aufgrund von Inhomogenitäten, Karbideinschlüssen, Schlacken, Seigerungen oder Härtefehlern verheerend auswirken. Der Prüfer weiss dann nicht, ob die Härteprüfmaschine oder die Platte fehlerhaft ist.

Damit diese Unsicherheit beseitigt wird, ist in der DIN 51303 die zulässige relative Spannweite der Prüfeindruckmesswerte definiert. Werden diese Werte überschritten, ist die Vergleichsplatte unbrauchbar. Damit diese hohe Anforderung einer gleichmässigen, zulässigen relativen Spannweite der Prüfeindruckmesswerte erreicht wird, ist eine aufwendige Fertigung notwendig.

Ein normal abgegossener Stahl weist bedingt durch die langen Abkühlzeiten Inhomogenitäten, Seigerungen, Karbidzeilen oder auch Fremdeinschlüsse auf. Es wird versucht, diese Fehler auszuschliessen. Dies gelingt aber nicht immer, da einmal entstandene Seigerungen oder grobe Karbide durch ein nachträgliches mechanisches Umformen nur zertrümmert werden oder in der Richtung anders angeordnet werden. Die Folge ist, dass immer wieder Ausfälle durch unzulässige Streuungen zu verzeichnen sind.

Aus der FR-A-2 078 119 ist bekannt, pulvermetallurgisch, d.h. durch Vorpressen und folgendes heissisostatisches Pressen, metallische Körper hoher Homogenität herzustellen. Der besonderen Anforderung bei der Herstellung von Härtevergleichsplatten, eine Oberfläche mit konstanter Härte auch bei mikroskopischer Betrachtung herzustellen, wird jedoch nicht Rechnung getragen.

Aufgabe der vorliegenden Erfindung ist demzufolge, ein Verfahren zur Verfügung zu stellen, das es erlaubt, Härtevergleichsplatten mit einer geringen relativen Spannweite der Prüfeindruckmesswerte mit verringerter Ausfallrate herzustellen.

Ein solches Verfahren ist im Anspruch 1 angegeben. Die weiteren Ansprüche geben bevorzugte Ausführungsformen an.

Der Erfindung liegt die Erkenntnis zugrunde, das durch die Verwendung von metallischem Pulver in legierter oder unlegierter Form ein homogenes isotropes Gefüge erzielt wird. Dies vor allem dadurch, dass das Pulver in eine Kapsel gefüllt wird, evakuiert und heissisostatisch gepresst wird. Der beim heissisostatischen Pressen herrschende Druck erlaubt es, eine Temperatur einzustellen, die zu keinem unerlaubten Kornwachstum führt und auch keine neuen Schmelzphasen erzeugt. Insbesondere können Schmelzphasen beim Pressen vermieden werden. Das Pulver wird im festen Zustand zusammengesintert, wobei sich die Pulverkörner mittels Diffusion verbinden. Da keine Flüssigphase erzeugt wird, kann auch keine Schlacke entstehen. Die Karbidgrössen und eventuelle Fremdeinschlüsse durch die Korngrösse und die Abkühlgeschwindigkeit des Pulvers während des Verdüsungsprozesses sind begrenzt. Da aber nur Pulver mit Korngrössen bis zu maximal 1,5 mm verwendet wird, sind die direkt im Pulverkorn entstehenden Karbide oder eventuelle Schlackeneinschlüsse vernachlässigbar klein.

Das metallische Pulver kann vollständig aus einem oder mehreren Metallen, vollständig aus Karbiden oder aus einer dazwischenliegenden Mischung davon bestehen. In der Regel beträgt der Karbidanteil höchstens 10 %. Prozentangaben sind hier und im folgenden, soweit nicht anders angegeben, Gewichtsprozente.

Die Form des mit dem erfindungsgemässen Verfahren hergestellten Formkörpers ist bevorzugt durch die Form der Kapsel vorgegeben, in die das Ausgangsmaterial vor dem Pressen eingefüllt wird. U. a. auch zur Erzielung einer hinreichend·hohen Packungsdichte, die auch ein Vorpressen unnötig macht, wird daher bevorzugt Pulver mit einer Korngrösse von ca. 10 µm bis 1,5 mm, bevorzugt von ca. 10 µm bis 0,5 mm eingesetzt.

Die Presstemperatur muss jedenfalls unterhalb der Temperatur gewählt werden, bei der Schmelzphasen im Ausgangsmaterial unter den Prozessbedingungen auftreten. Eine Untergrenze für die Temperatur ist allein dadurch gegeben, dass noch eine Sinterung stattfinden kann. Erfahrungsgemäss können Pressvorgänge im Extremfall auch bei Zimmertemperatur (20°C) durchführbar sein. Im allgemeinen werden jedoch deutlich höhere Temperaturen angewandt, z. B. von mindestens 200 °C und oft von mindestens 450 °C.

Der Pressdruck kann von 100 bar bis 4000 bar betragen. Ein gängiger Druckbereich ist von 500 bar bis 2000 bar und insbesondere 1000 bis 1300 bar.

Durch kontrolliertes Abkühlen kann eine weitere Verbesserung des Produkts erreicht werden. Es genügt jedoch auch die thermische Trägheit der heissisostatischen Presse.

In den folgenden bevorzugten Beispielen wird das erfindungsgemässe Verfahren näher erläutert:

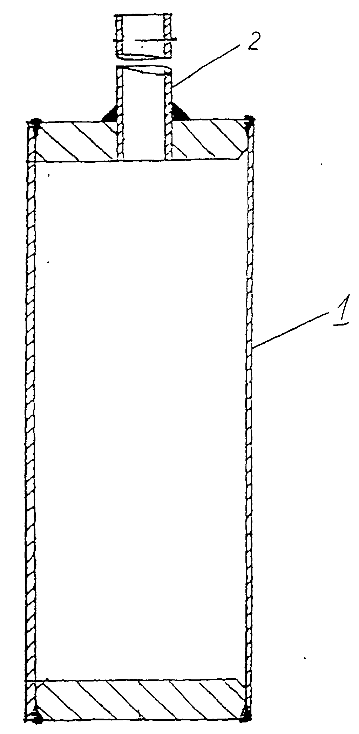

- Figur 1: zeigt eine Kapsel für heissisostatisches Pressen.

### Beispiel 1:

Pulver der Qualität 1.2842 (Werkstoffnummer nach DIN) mit einer Korngrösse < 500 µm wird in eine Stahlkapsel 1 mit den Innenmassen 115 mm Ø (Durchmesser) x 1000 mm Länge gefüllt. Nach dem Einfüllen wird die Kapsel 1 am Einfüllstutzen 2 evakuiert und gasdicht verschlossen. Die derart vorbereitete Kapsel 1 wird in eine heissisostatische Presse eingebracht und bei einer Temperatur von 1150 °C während einer Zeit von 3 Stunden mit einem Druck von 1000 bar gesintert. Durch eine gezielte langsame Abkühlung im Bereich zwischen 800° C bis 500 °C (Abkühlzeit 12 °C/h) erhält man ein weiches, homogenes, isotropes Material. Der derart hergestellte Formkörper wird überdreht und in runde Platten mit 90 mm Ø und 20 mm Dicke geschnitten. Diese Platten werden in einem Durchstosskammerofen bei 820° C austenitisiert und anschliessend im Warmbad abgeschreckt. Ein anschliessendes 2maliges Anlassen bei 360 °C und 340 °C erlaubt das Erreichen einer Härte von 600 HV100 ± 20 HV100. Die Platten werden anschliessend poliert und die Härte über den Querschnitt gemessen. Die Härtespannweite pro Platte betrug maximal 15 HV100.

Die Härteangaben sind Vickershärten mit definierter Belastung in kg, z. B. HV100: 100 kg Belastung.

### Beispiel 2:

Ein Pulver der Qualität 1.2842 wurde, wie im Beispiel 1 beschrieben, in eine Kapsel gefüllt, heissisostatisch gepresst und weichgeglüht, aber anschliessend nicht mehr wärmebehandelt, sondern direkt poliert und als Härtevergleichsplatte eingesetzt. Dabei wurden folgende Härtewerte gemessen: Mittelwert 229,1 HV5; maximaler Wert 225,1 HV5; minimaler Wert 231,5 HV5; Standardabweichung 2,2.

Abwandlungen und Anpassungen an die jeweiligen angestrebten Härtevergleichsplatten sind dem Fachmann aus der Darstellung der Erfindung ersichtlich, ohne den Rahmen der Erfindung zu verlassen.

## Patentansprüche

1. Anwendung eines Verfahrens, bei dem:
- das Pulver in eine gasdichte verformbare Kapsel, insbesondere eine Stahlkapsel, gefüllt wird,
- die Kapsel evakuiert und verschlossen wird, und
- die Kapsel in einer heissisostatischen Presse bei einem Pressdruck von 100 bis 4000 bar und bei einer Temperatur gepresst wird, bei der keine Flüssigphasen während des Pressens auftreten, für die Herstellung von Härtevergleichsplatten, wobei das Pulver ein metallisches Pulver aus den Materialbestandteilen der Härtevergleichsplatten ist, insbesondere Metalle in legierter oder unlegierter Form enthält, der Karbidanteil im Pulver höchstens 10% beträgt.

2. Anwendung gemäss Anspruch 1, **dadurch gekennzeichnet, dass** das Pressen bei einem Druck von 500 bis 2000 bar, bevorzugt bei 1000 bis 1300 bar erfolgt.

3. Anwendung gemäss einem der Ansprüche 1 oder 2, **dadurch gekennzeichnet, dass** das Pressen bei Temperaturen von mindestens 20 °C, insbesondere von mindestens 200 °C und insbesondere von mehr als 450 °C erfolgt.

4. Anwendung gemäss einem der Ansprüche 1 bis 3, **dadurch gekennzeichnet, dass** das Pulver eine Korngrösse von 10 µm. bis 1,5 mm, bevorzugt von 10 µm bis 0,5 mm aufweist.

5. Anwendung gemäss einem der Ansprüche 1 bis 4, **dadurch gekennzeichnet, dass** das Pressen mindestens eine Stunde lang durchgeführt wird.

6. Anwendung gemäss einem der Ansprüche 1 bis 5, **dadurch gekennzeichnet, dass** ein Pulver mit der Kurzbezeichnung DIN 90 Mn Cr V 8 (Werkstoffnummer 1.2842 nach DIN) eingesetzt wird.

7. Anwendung gemäss einem der Ansprüche 1 bis 6, **dadurch gekennzeichnet, dass** die Form der Kapsel (1) derart gewählt wird, dass sich Formkörper in der Form eines Prismas, eines Würfels oder einer Dreieckplatte ergeben, die selbst als Härtevergleichsplatten verwendbar sind oder aus denen Härtevergleichsplatten durch schneidende und/oder abtragende Bearbeitung herstellbar sind.

8. Anwendung gemäss einem der Ansprüche 1 bis 7, **dadurch gekennzeichnet, dass** die Formkörper und/oder Härtevergleichsplatten einer thermischen Nachbehandlung zur Erzielung der gewünschten Härte unterzogen werden.

9. Anwendung nach einem der Ansprüche 1 bis 8 zur Herstellung von Härtevergleichsplatten zur Prüfung von Härteprüfgeräten, insbesondere von Rockwell-Härteprüfgeräten, Brinell-Härteprüfgeräten, Vickers-Härteprüfgeraten.

10. Anwendung nach einem der Ansprüche 1 bis 9 zur Herstellung von Härtevergleichsplatten mit einem isotropen, homogenen Gefüge.

## Claims

1. Application of a method in which:
- the powder is filled into a gas-tight, deformable capsule, more particularly a steel capsule,
- the capsule is evacuated and sealed, and
- the capsule is pressed in a hot isostatic press at a pressing pressure of 100 to 4000 bar and at a temperature where no liquid phases are created during pressing,
for the manufacture of hardness comparison plates,
the powder being a metallic powder consisting of the material components of the hardness comparison plates, more particularly containing metals in an alloyed or unalloyed form, and the carbide content of the powder being equal to 10 % at the most.

2. Application according to claim 1, **characterised in that** pressing is effected at a pressure of 500 to 2000 bar, preferably at 1000 to 1300 bar.

3. Application according to one of claims 1 or 2, **characterised in that** pressing is effected at temperatures of at least 20 °C, particularly of at least 200 °C, more particularly of more than 450 °C.

4. Application according to one of claims 1 to 3, **characterised in that** the grain size of the powder is comprised between 10 µm and 1.5 mm, preferably between 10 µm and 0.5 mm.

5. Application according to one of claims 1 to 4, **characterised in that** pressing is effected for at least one hour.

6. Application according to one of claims 1 to 5, **characterised in that** a powder having the code designation DIN 90 Mn Cr V 8 is used (material number 1.2842 according to DIN).

7. Application according to one of claims 1 to 6, **characterised in that** the shape of the capsule (1) is chosen such that moulded bodies in the form of a prism, a cube, or a triangular plate are obtained, which may be used as hardness comparison plates themselves, or from which hardness comparison plates can be manufactured by cutting and/or abrasive machining.

8. Application according to one of claims 1 to 7, **characterised in that** the moulded bodies and/or hardness comparison plates are subjected to a thermal aftertreatment in order to achieve the desired hardness.

9. Application according to one of claims 1 to 8 for the manufacture of hardness comparison plates for the testing of hardness testing apparatus, more particularly of Rockwell hardness testing apparatus, Brinell hardness testing apparatus, Vickers hardness testing apparatus.

10. Application according to one of claims 1 to 9 for the manufacture of hardness comparison plates having an isotropic, homogenous structure.

## Revendications

1. Application d'un procédé dans lequel:
- la poudre est introduite dans une capsule déformable et étanche aux gaz, plus particulièrement une capsule en acier,
- la capsule est vidée d'air et fermée, et
- la capsule est pressée dans une presse isostatique à température élevée à une pression de 100 à 4000 bar et à une température n'entraînant pas la formation de phases liquides pendant le pressage,
pour la fabrication de plaques de comparaison de la dureté, la poudre étant une poudre métallique composée des matériaux constituant les plaques de comparaison de la dureté, plus particulièrement de métaux sous forme alliée ou non alliée, et la teneur en carbure de la poudre étant inférieure ou égale à 10 %.

2. Application selon la revendication 1, **caractérisée en ce que** le pressage est effectué à une pression de 500 à 2000 bar, préférablement de 1000 à 1300 bar.

3. Application selon l'une des revendications 1 ou 2, **caractérisée en ce que** le pressage est effectuée à des températures de 20 °C au moins, particulièrement de 200 °C au moins, et plus particulièrement de plus de 450 °C.

4. Application selon l'une des revendications 1 à 3, **caractérisée en ce que** la poudre présente une grosseur des grains de 10 µm a 1,5 mm, préférablement de 10 µm à 0,5 mm.

5. Application selon l'une des revendications 1 à 4, **caractérisée en ce que** le pressage est effectué pendant une heure au moins.

6. Application selon l'une des revendications 1 à 5, **caractérisée en ce qu'**une poudre répondant à la désignation abrégée DIN 90 Mn Cr V 8 est utilisée (numéro du matériau 1.2842 selon DIN).

7. Application selon l'une des revendications 1 à 6, **caractérisée en ce que** la forme de la capsule (1) est choisie de telle manière qu'il en résulte des corps moulés en forme d'un prisme, d'un cube ou d'une plaque triangulaire qui sont utilisables en tant que plaques de comparaison de la dureté eux-mêmes ou permettent la fabrication de plaques de comparaison de la dureté par un usinage coupant et/ou par enlèvement.

8. Application selon l'une des revendications 1 à 7, **caractérisée en ce que** les corps moulés et/ou les plaques de comparaison de la dureté sont soumis à un retraitement thermique afin d'atteindre la dureté souhaitée.

9. Application selon l'une des revendications 1 à 8 pour la fabrication de plaques de comparaison de la dureté destinées au contrôle d'appareils pour essais de dureté, plus particulièrement d'appareils pour essais de dureté Rockwell, d'appareils pour essais de dureté Brinell, d'appareils pour essais de dureté Vickers.

10. Application selon l'une des revendications 1 à 8 pour la fabrication de plaques de comparaison de la dureté ayant une structure isotrope et homogène.
